(19)

**Europäisches Patentamt**
**European Patent Office**
**Office européen des brevets**

(11) **EP 4 715 771 A1**

(12) **EUROPEAN PATENT APPLICATION**

(43) Date of publication:
**25.03.2026 Bulletin 2026/13**

(21) Application number: **24315431.7**

(22) Date of filing: **23.09.2024**

(51) International Patent Classification (IPC):
**G07C 9/25** *(2020.01)* **G07C 9/27** *(2020.01)*
**G07C 9/37** *(2020.01)* **G07C 9/38** *(2020.01)*

(52) Cooperative Patent Classification (CPC):
**G07C 9/37; G06Q 10/06; G06Q 30/018;**
**G06Q 50/265; G06Q 50/40; G07C 9/25; G07C 9/27;**
**G07C 9/38**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicants:
• Amadeus S.A.S.
**06410 Biot (FR)**
• ICM Airport Technics Pty Ltd.
**Botany, NSW 2019 (AU)**

(72) Inventors:
• **Abraham, Eldho**
**SYDNEY (AU)**
• **Dinkelmann, Rainer Rudolf**
**BUDERIM (AU)**
• **Landgrebe, Thomas**
**BOTANY (AU)**
• **Price, Mathew**
**SYDNEY (AU)**

(74) Representative: **Samson & Partner Patentanwälte**
**mbB**
**Widenmayerstraße 6**
**80538 München (DE)**

(54) **METHOD FOR DYNAMIC AUTHENTICATION CONTROL AT TRANSIT FACILITY AND AN APPARATUS THEREOF**

(57) The present disclosure relates to method and apparatus for dynamic authentication control at a transit facility having a plurality of checkpoints. The method recites obtaining transit facility data pertaining to operations and schedules of the transit facility. The transit facility data is analyzed to determine a plurality of users expected at the checkpoint, and a number of enrolled and unenrolled users for being authenticated at a biometric authentication system are determined based on the transit facility data. Further, a set of unenrolled users expected to arrive at the authentication system for authentication are estimated using a ROC model. Further, using the ROC model, a false positive identification rate (FPIR) is predicted based on the number of enrolled users and a biometric authentication threshold value. Furthermore, one or more unenrolled users which are expected to be authenticated by the biometric authentication system are determined based on the set of unenrolled users and the FPIR. Lastly, the one or more unenrolled users expected to be authenticated are optimized by adjusting the threshold value to dynamically control the authentication at the transit facility.

FIG. 6

**Description**

**TECHNICAL FIELD**

The present disclosure generally relates to biometric authentication, and particularly to an apparatus and a method of dynamic authentication control at a transit facility.

**BACKGROUND**

The statements in this section merely provide background information related to the present disclosure and may not constitute prior art.

In recent years, biometric authentication has gained significant traction as a method for enhancing security and streamlining operations across various industries, particularly in air travel. Numerous biometric trials have been conducted worldwide, primarily focusing on boarding gates, where the number of participants is limited. These trials typically involve only a few hundred enrolled individuals, often corresponding to the flight capacity and the number of passengers who consent to participate.

While these small-scale trials have shown promising results, scaling biometric authentication systems to cover the entire airport infrastructure introduces several challenges. One of the most critical issues arises at security check touchpoints, where the number of individuals enrolled in biometric systems increases significantly. As the gallery of biometric data grows to accommodate a larger pool of enrolled individuals, the system's accuracy can be compromised, potentially leading to a higher rate of false positive identifications. This presents a considerable challenge in maintaining security and efficiency when processing a large number of travelers.

Thus, there is need to address these issues as various transit facilities, such as airports, continue to seek scalable biometric solutions that can handle large volumes of passengers while maintaining a high level of accuracy in identification.

**BRIEF SUMMARY**

One or more shortcomings discussed above are overcome, and additional advantages and features are provided by the present disclosure. Other embodiments and aspects of the disclosure are described in detail herein and are considered a part of the disclosure.

In one non-limiting embodiment of the present disclosure, a method for dynamic authentication control at a transit facility having a plurality of checkpoints is disclosed. The method recites obtaining transit facility data pertaining to operations and schedules of the transit facility. For each checkpoint of the transit facility, the method performs the following steps. The method recites analyzing the transit facility data to determine a plurality of users expected at the checkpoint, and determining a number of enrolled users and a number of unenrolled users for being authenticated at a biometric authentication system, among the plurality of users, based on the transit facility data. The method further recites estimating, using a Receiver Operating Characteristic (ROC) model, a set of unenrolled users, among the number of unenrolled users, expected to arrive at the biometric authentication system provided at the checkpoint of the transit facility for authentication and further recites predicting, using the ROC model, a false positive identification rate (FPIR) based on the number of enrolled users and a biometric authentication threshold value of the biometric authentication system. The method further recites determining one or more unenrolled users, among the set of unenrolled users, expected to be authenticated by the biometric authentication system based on the set of unenrolled users and the FPIR and optimizing the one or more unenrolled users expected to be authenticated by the biometric authentication system by adjusting the biometric authentication threshold value to dynamically control the authentication at the transit facility.

In another non-limiting embodiment of the present disclosure, the number of enrolled users indicates users who have opted for the authentication via the biometric authentication system provided at the checkpoint of the transit facility, and the number of unenrolled users indicates users who have not opted for the authentication via the biometric authentication system provided at the checkpoint of the transit facility.

In yet another non-limiting embodiment of the present disclosure, the biometric authentication threshold value is preset to obtain a desired false negative identification rate (FNIR).

In yet another non-limiting embodiment of the present disclosure, the transit facility data comprises at least one of: a number of checkpoints, user transit time data indicating time duration required to travel from one checkpoint to another checkpoint of the transit facility, transport schedule data, check-in time data of the transit facility, a number of users enrolled after arrival at the transit facility for the biometric authentication system, and a number of users already being enrolled before arrival at the transit facility for the biometric authentication system.

In yet another non-limiting embodiment of the present disclosure, the ROC model is trained using a plurality of datasets, wherein each dataset comprises a diverse range of user images.

In yet another non-limiting embodiment of the present disclosure, training the ROC model using the plurality of datasets comprises: receiving the plurality of datasets of varying sizes, generating ROC data using the biometric authentication system for each of the plurality of datasets, wherein the ROC data is indicative of a relation between a FNIR and the FPIR across a spectrum of biometric authentication threshold values, and training a statistical learning model, based on the ROC data, to identify the relation between the FNIR and the FPIR.

In yet another non-limiting embodiment of the present disclosure, determining the one or more unenrolled users, among the set of unenrolled users, expected to be authenticated by the biometric authentication system based on the set of unenrolled users and the FPIR comprises determining the one or more unenrolled users by: $FP = N_{unmated} \times FPIR(Nmated, thresh)$. The FP represents the one or more unenrolled users, the $N_{unmated}$ represents the set of unenrolled users, and the $FPIR(N_{mated}, thresh)$ represents the false positive identification rate based on the number of enrolled users ($N_{mated}$), and the biometric authentication threshold value (thresh) of the biometric authentication system.

In yet another non-limiting embodiment of the present disclosure, an apparatus to dynamic control authentication at a transit facility having a plurality of checkpoints, is disclosed. The apparatus comprises a processor and a memory operatively coupled to the processor, the memory storing instructions that, when executed by the processor, cause the processor to: obtain transit facility data pertaining to operations and schedules of the transit facility. For each checkpoint of the transit facility, the processor analyzes the transit facility data to determine a plurality of users expected at the checkpoint and determines a number of enrolled users and a number of unenrolled users for being authenticated at a biometric authentication system, among the plurality of users, based on the transit facility data. The processor further estimates, using a Receiver Operating Characteristic (ROC) model, a set of unenrolled users, among the number of unenrolled users, expected to arrive at the biometric authentication system provided at the checkpoint of the transit facility for authentication. The processor further predicts, using the ROC model, a false positive identification rate (FPIR) based on the number of enrolled users and a biometric authentication threshold value of the biometric authentication system and determines one or more unenrolled users, among the set of unenrolled users, expected to be authenticated by the biometric authentication system based on the set of unenrolled users and the FPIR. The processor optimizes the one or more unenrolled users expected to be authenticated by the biometric authentication system by adjusting the biometric authentication threshold value to dynamically control the authentication at the transit facility.

In yet another non-limiting embodiment of the present disclosure, an apparatus to dynamic control authentication at a transit facility having a plurality of checkpoints is disclosed. The apparatus comprises: means for obtaining transit facility data pertaining to operations and schedules of the transit facility. For each checkpoint of the transit facility, the apparatus comprises various means for performing various operations. For example, the apparatus comprises means for analyzing the transit facility data to determine a plurality of users expected at the checkpoint, means for determining a number of enrolled users and a number of unenrolled users for being authenticated at a biometric authentication system, among the plurality of users, based on the transit facility data, and means for estimating, using a Receiver Operating Characteristic (ROC) model, a set of unenrolled users, among the number of unenrolled users, expected to arrive at the biometric authentication system provided at the checkpoint of the transit facility for authentication. The apparatus further comprises means for predicting, using the ROC model, a false positive identification rate (FPIR) based on the number of enrolled users and a biometric authentication threshold value of the biometric authentication system, means for determining one or more unenrolled users, among the set of unenrolled users, expected to be authenticated by the biometric authentication system based on the set of unenrolled users and the FPIR, and means for optimizing the one or more unenrolled users expected to be authenticated by the biometric authentication system by adjusting the biometric authentication threshold value to dynamically control the authentication at the transit facility.

In yet another non-limiting embodiment of the present disclosure, a non-transitory computer readable media for dynamic authentication control at a transit facility having a plurality of checkpoints is disclosed. The non-transitory computer readable media stores one or more instructions which, when executed by at least one processor causes the at least one processor to: obtain transit facility data pertaining to operations and schedules of the transit facility. For each checkpoint of the transit facility: analyze the transit facility data to determine a plurality of users expected at the checkpoint and determine a number of enrolled users and a number of unenrolled users for being authenticated at a biometric authentication system, among the plurality of users, based on the transit facility data. The one or more instructions further cause the at least one processor to estimate, using a Receiver Operating Characteristic (ROC) model, a set of unenrolled users, among the number of unenrolled users, expected to arrive at the biometric authentication system provided at the checkpoint of the transit facility for authentication, and predict, using the ROC model, a false positive identification rate (FPIR) based on the number of enrolled users and a biometric authentication threshold value of the biometric authentication system. The one or more instructions further cause the at least one processor to determine one or more unenrolled users, among the set of unenrolled users, expected to be authenticated by the biometric authentication system based on the set of unenrolled users and the FPIR, and optimize the one or more unenrolled users expected to be authenticated by the biometric authentication system by adjusting the biometric authentication threshold value to dynamically control the authentication at the transit facility.

The foregoing summary is illustrative only and is not intended to be in any way limiting. In addition to the illustrative aspects, embodiments, and features described above, further aspects, embodiments, and features will become apparent by reference to the drawings and the following detailed description

**BRIEF DESCRIPTION OF THE SEVERAL VIEWS OF THE DRAWINGS**

To easily identify the discussion of any particular element or act, the most significant digit or digits in a reference number refer to the figure number in which that element is first introduced.

FIG. 1 illustrates Receiver Operating Characteristic (ROC) curves plotting the False Positive Rate (FPR) against the False Rejection Rate (FRR) for different gallery sizes in accordance with an embodiment of the present disclosure.

FIG. 2 illustrates a variation of FPR with the match threshold in accordance with one embodiment.

FIG. 3 illustrates a two-dimensional (2D) heat map highlighting inverse relationship between the enrolled gallery size and the number of unmated authentications with a FNIR of 0.1 in accordance with one embodiment.

FIG. 4 illustrates a heat map with a FNIR of 0.15 in accordance with one embodiment.

FIG. 5 illustrates a heat map with a FNIR of 0.2 in accordance with one embodiment.

FIG. 6 illustrates a block diagram of a system to dynamically control authentication at a transit facility having a plurality of checkpoints in accordance with one embodiment.

FIG. 7 illustrates a graph showing gallery populated at check-in in accordance with one embodiment.

FIG. 8 illustrates a graph showing variation of authentication with respect to gallery size in accordance with one embodiment.

FIG. 9 illustrates a graph showing the occurrence of false positives as the gallery size changes over time in accordance with one embodiment.

FIG. 10 illustrates a graph showing gallery populated at check-in in accordance with one embodiment.

FIG. 11 illustrates a graph showing variation of authentication with respect to gallery size in accordance with one embodiment.

FIG. 12 illustrates a graph showing the occurrence of false positives as the gallery size changes over time in accordance with one embodiment

FIG. 13 illustrates a graph showing gallery populated at check-in in accordance with one embodiment.

FIG. 14 illustrates a graph showing variation of authentication with respect to gallery size in accordance with one embodiment.

FIG. 15 illustrates a graph showing the occurrence of false positives as the gallery size changes over time in accordance with one embodiment

FIG. 16 illustrates a graph showing gallery populated at check-in in accordance with one embodiment.

FIG. 17 illustrates a flow chart of a method for dynamic authentication control at a transit facility having a plurality of checkpoints in accordance with one embodiment.

It should be appreciated by those skilled in the art that any block diagrams herein represent conceptual views of the illustrative systems embodying the principles of the present subject matter. Similarly, it will be appreciated that any flowcharts, flow diagrams, state transition diagrams, pseudo code, and the like represent various processes which may be substantially represented in computer readable medium and executed by a computer or processor, whether or not such computer or processor is explicitly shown.

## DETAILED DESCRIPTION

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the spirit and the scope of the disclosure.

The terms "comprise", "comprising", or any other variations thereof, are intended to cover a non-exclusive inclusion, such that a setup, device, or method that comprises a list of components or steps does not include only those components or steps but may include other components or steps not expressly listed or inherent to such setup or device or method. In other words, one or more elements in a device or system or apparatus proceeded by "comprises... a" does not, without more constraints, preclude the existence of other elements or additional elements in the device or system or apparatus.

The terms like "at least one" and "one or more" may be used interchangeably throughout the description. The terms like "biometric authentication system", "authentication system", "facial biometric authentication system", "facial authentication system" and "system" may be used interchangeably throughout the description. The terms "match threshold", "match score threshold", "score threshold", "biometric authentication threshold values" and "threshold" may be used interchangeably throughout the description. The terms "biometric enrolment" and "enrolment" may be used interchangeably throughout the description. In the context of the present disclosure, various acronyms and terms are employed to describe the processes and outcomes related to biometric systems, which are essential for understanding the underlying experiments and visualizations. The following definitions provide clarity on these terms. The biometric enrolment refers to the process of registering or enrolling the facial data of a legitimate user into a gallery or database. This enrolment allows the biometric system to later match the user's face against an unknown face for the purpose of verifying the identity of the user. A mated match refers to the successful matching of a face to a pre-enrolled identity that exists in the enrolment gallery or database. Further, an unmated match occurs when the system attempts to match the face of a user who is not enrolled in the gallery or database, resulting in a match to an identity that does not exist in the enrolment gallery.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense. In the following description, well known functions or constructions are not described in detail since they would obscure the description with unnecessary detail.

There is a rapid increase of interest in the deployment of biometric authentication technologies in the travel industry, particularly within airports. The biometric authentication streamlines passenger identification and boarding processes to enhance passenger convenience and improve operational efficiency, and reduces the time required for identity verification. The biometric authentication systems may be implemented across various touchpoints of a transit facility. Some of the key touchpoints where passengers are required to verify their identity may be: Check-in Kiosks, Automatic Bag Drop, Pre-security, Immigration, Waiting Lounges, and Boarding. By integrating biometrics into these key touchpoints, the transit facilities may provide a more efficient, secure, and seamless travel experience, while simultaneously also addressing the challenges posed by traditional identification methods. As the transit facilities, such as airports and airlines, anticipate an increase in the number of passengers, thus optimizing airport operations through scalable biometric solutions is becoming a strategic imperative. By expanding biometric adoption, the airports may handle higher volumes of passengers more efficiently while maintaining stringent security standards. This may not only reduce bottlenecks at critical touchpoints but also ensure, that passengers experience smoother and faster transitions through the airport, from check-in to boarding. As more passengers enroll for the biometric authentication systems, the transit facilities may leverage these technologies to enhance security protocols by reducing human error and mitigating potential threats.

By automating identity verification through the biometric authentication, the transit facilities may maintain high levels of accuracy in identification processes. However, a wrong identification at the transit facilities may result in significant consequences. The wrong identification broadly falls into two categories: false positive authentication and false negative authentication. In case of false positive authentication, an unauthorized individual may be mistakenly authenticated, allowing access to restricted areas or board a flight they are not supposed to. This poses a serious security risk, as it may potentially enable imposters to bypass critical security protocols. Whereas in case of the false negative authentication, a legitimate passenger may be wrongly rejected by the biometric system, despite being authorized to proceed. This may lead to unnecessary delays, inconvenience, or even denial of boarding, creating dissatisfaction and operational challenges.

Further, even for a small or medium sized airport, where the passengers' daily footfall may be in thousands, providing facial biometrics-based authentication at different touchpoints may be very challenging resulting in problems mentioned above, based on the strategy used for biometric scaling. Further, scaling the biometric authentication systems to cover the entire airport infrastructure introduces several challenges. One of the most critical issues arises at security check touchpoints, where the number of individuals enrolled in biometric systems increases significantly. As the gallery of biometric data grows to accommodate a larger pool of enrolled individuals, the system's accuracy may be compromised, potentially leading to a higher rate of false positive identifications. This presents a considerable challenge in maintaining security and efficiency when processing a large number of travelers. The increased gallery size may degrade system accuracy, as the likelihood of false positive identifications rises. The balance between security and efficiency becomes harder to maintain, especially when processing a large number of travelers.

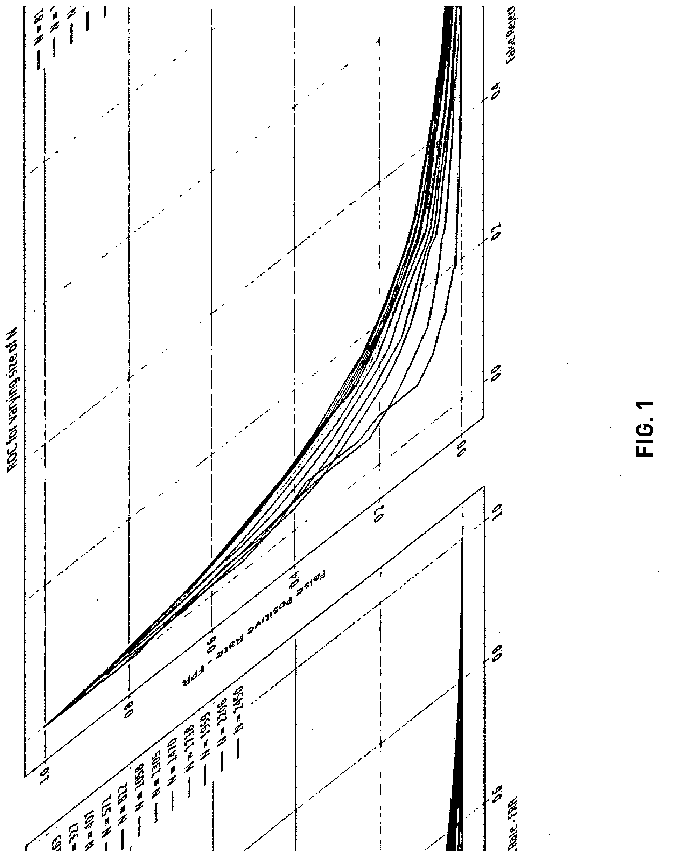

**FIG.** 1 illustrates Receiver Operating Characteristic (ROC) curves plotting the False Positive Rate (FPR) against the False Rejection Rate (FRR) for different gallery sizes in accordance with an embodiment of the present disclosure. In an embodiment of the present disclosure, the gallery refers to a set of enrolled faces used for comparison during biometric authentication. Each point on the ROC curve represents a trade-off between the system's ability to correctly reject non-enrolled identities and its likelihood of falsely accepting an unauthorized identity. As depicted in FIG. 1, multiple ROC curves correspond to different gallery sizes, ranging from smaller to larger galleries. It may be noted that for a fixed FRR value (for example, 0.02), a larger gallery size results in a higher FPR compared to a smaller gallery. This indicates that as the number of enrolled faces increases, the authentication system is more prone to false positives, even if the rejection rate remains constant. For authentication systems deployed in airport scenarios, maintaining an FRR between 0.02 and 0.05 is considered optimal based on findings from the National Institute of Standards and Technology (NIST) paperless travel experiments.

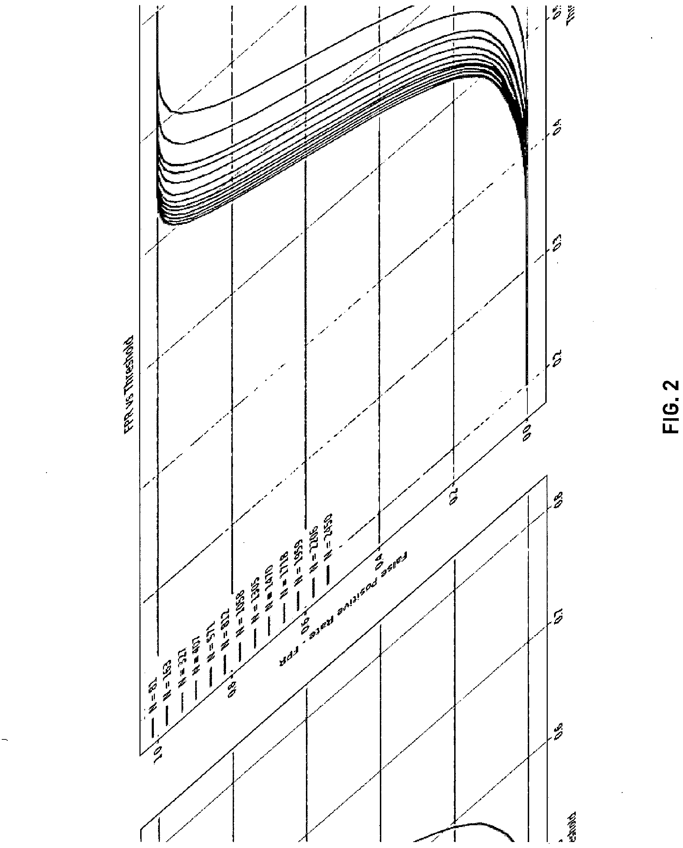

The FPR may also be analyzed by varying a match threshold, which provides additional insight into how gallery size affects false positives. FIG. 2 illustrates a variation of FPR with the match threshold. In FIG. 2, y-axis represents the FPR and the x-axis corresponds to the match threshold, which may range from 0.2 to 0.8, but not limited thereto. A match score is a numerical value that quantifies similarity between an enrolled face (in the gallery) and a target face (to be authenticated in real-time). A lower match score suggests that the faces resemble each other, while a higher score indicates dissimilarity. By setting a threshold on the match score, the system may determine which pairs are considered a match. Any score above the threshold is rejected as "not matched," while any score below is accepted as a possible match.

As shown in FIG. 2, as the match threshold increases, the FPR also increases regardless of the gallery size. This is because a higher threshold allows for a less strict matching criterion, meaning that faces that are only loosely similar to the enrolled faces may be mistakenly accepted as matches. Essentially, as the threshold is relaxed, the system becomes more permissive which leads to a higher rate of false positives. The effect of gallery size is also pronounced in this context. For a given threshold, the FPR is significantly higher when the gallery size is larger compared to when it is smaller. This occurs because with more faces enrolled, the likelihood of encountering a face that loosely resembles one of the enrolled faces increases, even if they are not a true match. Thus, the larger galleries inherently introduce more false positives when the threshold is applied across the system. Thus, both the match threshold and the gallery size have a substantial impact on the FPR, and therefore careful tuning of the threshold is required to balance accuracy and security when the number of enrolled individuals increases.

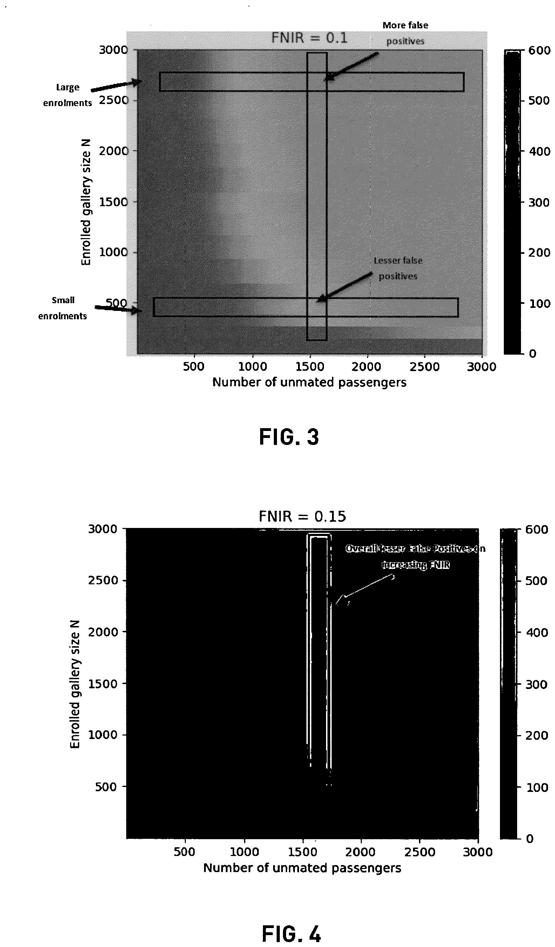

The above-mentioned observations are further explained using heat maps in accordance with an embodiment of the present disclosure. FIG. 3 illustrates a two-dimensional (2D) heat map highlighting the inverse relationship between the enrolled gallery size and the number of unmated authentications. The heat map illustrated in FIG. 3 provides a clear visual representation of how the system's performance may deteriorate with an increase in the gallery size. When the gallery contains a smaller number of enrolled faces, the authentication system may handle a larger number of unmated authentications without generating many false positives. In contrast, as the gallery size increases, the same number of unmated authentications results in a higher false positive rate. This effect is due to the larger pool of enrolled faces increasing the likelihood that an unmated face may resemble one of the enrolled faces, even if they are not a true match.

In the heat map shown in FIG. 3, a False Non-Match Identification Rate (FNIR) or False Rejection Rate (FRR) may be set at 0.1. This implies that "1" in every 10 passengers may be wrongly rejected during mated authentication, indicating the system's trade-off between maintaining accuracy for enrolled faces and controlling false positives for unmated authentications. The heat map visually demonstrates how varying the gallery size influences the system's capacity to perform unmated authentications while keeping false positives to a minimum. FIG. 3 underscores the importance of balancing gallery size with the operational demands of unmated authentication, especially in high-traffic environments like airports, where maintaining both security and efficiency is crucial.

FIG. 4 illustrates another heat map with the FRR of 0.15, i.e., 15% of legitimate users (mated identities) may be rejected by the system. With this higher FRR, the number of false positives generated during unmated authentication decreases overall, even as the gallery size varies. The reduction in false positives occurs because increasing the FRR that makes the authentication system more conservative in its acceptance of matches, effectively tightening the match threshold. As a result, the system becomes stricter in identifying matches, the chances of mistakenly accepting an unmated face as a match are reduced. Although this minimizes the false positives, the rejection rate for legitimate users increases. FIG. 4 visually captures this trade-off: as the FRR increases, the overall number of false positives decreases regardless of the gallery size. However, the impact of gallery size remains consistent i.e., larger galleries still produce more false positives compared to smaller ones, but the total number of false positives is lower than when the FRR is set to a lower value, such as 0.1.

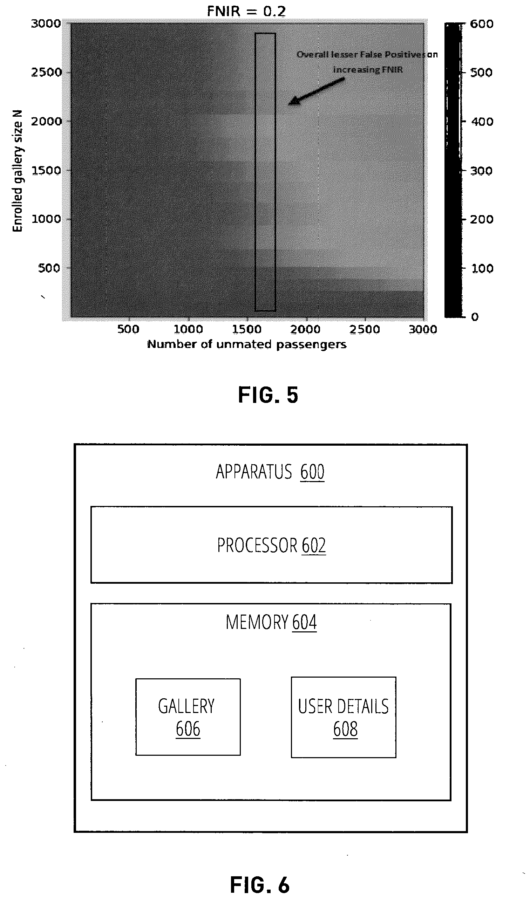

According to an embodiment, the FRR may also be increased to reduce the number of false positives, but this adjustment introduces a trade-off between false rejections (legitimate users being denied) and false acceptances (unauthorized users being allowed). As the FRR increases, the authentication system may become stricter in accepting matches, which leads to fewer false positives but more false rejections. When the FRR is set to 0.2, the system may achieve the lowest number of false positives compared to the earlier scenarios, as shown in FIG. 5. However, this comes with a significant downside, there is now a 20% chance that legitimate users (mated identities) will be incorrectly rejected. In practical terms, this means that "1" in every 5 passengers may be falsely rejected due to the higher FRR. While this tightens the security by minimizing false acceptances, it negatively impacts user experience by increasing the likelihood of legitimate passengers being denied access.

This highlights the inverse relationship between FRR and false positives, lowering false positives comes at the cost of increasing false rejections, and vice versa. The challenge lies in finding an optimal balance that ensures security without unduly inconveniencing legitimate users, especially in high-volume environments like airports where smooth operations are critical. The decision to set an acceptable FRR may depend on the specific operational requirements and tolerance for false positive versus false rejections.

The present disclosure describes techniques to dynamically control authentication at transit facilities to overcome the above-mentioned challenges. The present disclosure uses ROC modelling to predict the possible number of false positives based on the transit facility data at any particular time. The techniques of the present disclosure enable setting a false negative identification rate (FNIR) (or false reject rate) at different touchpoints and at different times to optimize the throughput of people. The settings may be determined based on ROC modelling to produce the number of false positives at any particular time. The techniques use several parameters as input to define what the FNIR at a specific touchpoint should be including quality of photo that may be taken there (based on camera hardware, lighting, time of day, etc.) and number of people likely to pass that touchpoint within a given timeframe (security touchpoint has a much higher N than a gate leading to one flight, for instance).

FIG. 6 illustrates a block diagram of an apparatus to dynamically control authentication at a transit facility having a plurality of checkpoints, in accordance with an embodiment of the present disclosure. The apparatus 600 may comprise a processor 602 and memory 604, but not limited thereto. In an embodiment, the apparatus 600 is a part of a biometric authentication system. In another embodiment, the apparatus 600 may be an entity external to the biometric authentication system. In an embodiment, biometric facial authentication systems may be installed at checkpoints of the transit facility. These checkpoints may comprise, but are not limited to, entry gates, check-in counters, pre-security screening areas, boarding gates, and other transit-related touchpoints. At each checkpoint, the facial authentication system enables seamless identification and verification of passengers, to ensure secure and efficient access to various areas within the facility. A user (passenger) may enroll in the authentication system either through a mobile application or using systems installed at the transit facility upon arrival.

For enrollment, an image of the user may be captured using the camera systems integrated into the mobile application or those installed at the transit facility. In an embodiment, the image may be processed to extract distinctive facial features using advanced biometric algorithms. Once processed, the image and its corresponding biometric data are stored in a secure photo gallery 606 within the memory. This gallery 606 may protect sensitive information, such as facial images, through encryption and controlled access. The stored biometric data may be then referenced during subsequent authentication attempts, where the user's live image is compared to the enrolled data to verify their identity. The biometric authentication system ensures that the facial recognition model can adapt to various conditions, such as changes in lighting, camera angle, or the user's appearance, while maintaining a high level of accuracy and minimizing false positives or negatives during the authentication process. This stored data remains vital throughout the user's journey within the transit facility, to enable fast and secure access at multiple checkpoints.

Initially, the processor 602 may obtain transit facility data pertaining to operations and schedules of the transit facility. In an embodiment, the transit facility may include (but not be limited to) any of the following: airport, bus station, railway station, or any similar transit hub. The transit facility data may comprise at least one of: a number of checkpoints, user transit time data indicating time duration required to travel from one checkpoint to another checkpoint of the transit facility, transport schedule data, check-in time data of the transit facility, a number of users enrolled after arrival at the transit facility for the biometric authentication system, and a number of users already being enrolled before arrival at the transit facility for the biometric authentication system, but is not limited thereto.

The number of checkpoints refers to the total number of security, boarding, or verification checkpoints within the transit facility. The user transit time data is an estimated or actual time it takes for a passenger to travel from one checkpoint to another within the facility. For instance, how long it takes to walk from the check-in counter to the security checkpoint, or from the security checkpoint to the boarding gate. This data helps the system predict when passengers are likely to arrive at each checkpoint, thereby allowing for dynamic adjustments in the authentication process (e.g., lowering false rejection rates during high-traffic periods). Further, the transport schedule data may indicate the timing of transport services like flights, trains, or buses. This provides information on when departures and arrivals are scheduled, which helps the system anticipate peak times when a high volume of passengers may need to pass through checkpoints. For instance, if a large flight is about to board, the system may prioritize and adjust the biometric authentication process accordingly.

Further, the check-in time data may refer to the specific check-in times provided by the transit facility, such as the window of time when passengers can check in for a flight or train. By knowing the check-in schedule, the system may predict the initial surge of passengers and adjust the biometric system's settings, such as enrollment and authentication thresholds, to accommodate this influx. The number of users enrolled after arrival captures the number of passengers who enroll in the biometric authentication system after they arrive at the transit facility. These passengers might use kiosks or mobile devices to enroll at the last minute. The system needs to account for these late enrollments and adjust the database dynamically to determine total number of enrolled users. The number of users already enrolled before arrival refers to passengers who have pre-enrolled in the biometric system before arriving at the facility, possibly through a mobile application or previous check-ins. By leveraging these different types of data, the biometric system may optimize authentication processes in real-time, adjusting its behavior based on passenger flow, transport schedules, and the enrollment status of users. For each checkpoint of the transit facility, processor 602 may analyze the transit facility data to determine the plurality of users expected at the checkpoint.

The effects of the transit facility data/passenger footfall on the false positive numbers at a given time may be understood by way of various examples explained below.

Let's consider an example of a single flight departing at 1:05 pm with the following table 1.

TABLE 1 - Single flight departure details

| Date | Time | Airport | Direction | Passenger s | Gate |
|------|------|---------|-----------|-------------|------|
| 06.09.2023 | 1:05:00 PM | MUC | D | 160 | 1A |

For the biometrics-based authentication enabled at different touchpoints for this flight, the following factors may be considered:

1. Airport-related factors:

  ∘ The number of hours before departure, check-in opens.
  ∘ Number of airport officials present to serve 'x' passengers (these people may potentially serve as unmated passengers which could result in accidental authentication due to unmated matches).
  ∘ Average transit time taken for a passenger between different checkpoints (e.g., the pre-security checkpoint may be considered, i.e. the time taken for a passenger to reach from a kiosk (after enrolment) to a pre-security checkpoint)
  o Check-in close time before the flight departure.

2. Biometric enrolments related factors

  ∘ Number of people enrolling for biometrics prior to check-in.
  ∘ Number of people enrolling for biometrics at the check-in.
  ∘ Number of people not enrolling for biometrics. These people may potentially serve as or result in unmated matches during authentication.

3. Face recognition model related factors

○ For a face recognition model, a threshold is chosen beyond which a person is authenticated or rejected. This is decided by the FRR of the model.
○ The face recognition gallery may be populated and updated dynamically as people enroll for biometrics or at a predetermined time before departure when people are most likely to need to be authenticated.

In an exemplary embodiment, for the above flight, let's assume the following factors to understand the passenger's flow as shown below table 2:

TABLE 2 - Factor affecting passenger flow for single flight departure

| Factors | Value |
| --- | --- |
| Pre Check-in biometric enrolment | 0% |
| Check-in biometric enrolment | 100% |
| No biometric enrolment | 0% |
| Check-in Open time | 4hrs before dep |
| Airport official to pax ratio | 1:10 |
| Walk time from kiosk to pre-security | 20mins |
| Check-in close before departure | 30mins |
| FRR | 0.02 |
| Gallery population | At check-in |

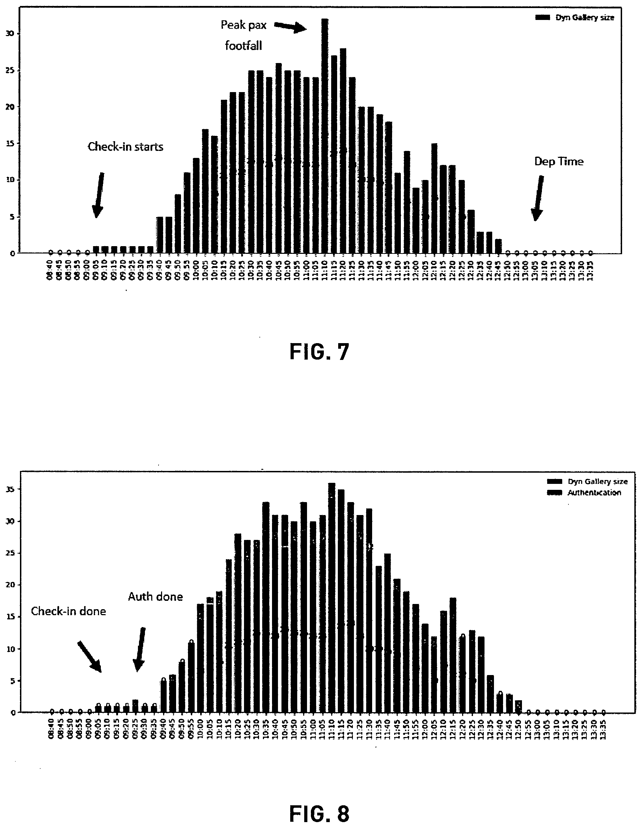

Considering the above factors as shown in table 2, the check-in window for the flight departing at 1 :05PM opens at 9:05AM. FIG. 7 illustrates the general passengers' footfall for check-in which may be considered as a normal distribution that peaks at around 1 1:00AM that is the mid-point between check-in and departure time.

The gallery size may also dynamically vary as the passengers who arrived at kiosk at 9:05AM may reach the pre-security at roughly 9:25AM. Once the passengers are successfully authenticated, they will be removed from the gallery. Hence, the gallery size varies according to the enrolments and the subsequent authentications done at a particular time, as illustrated in FIG. 8.

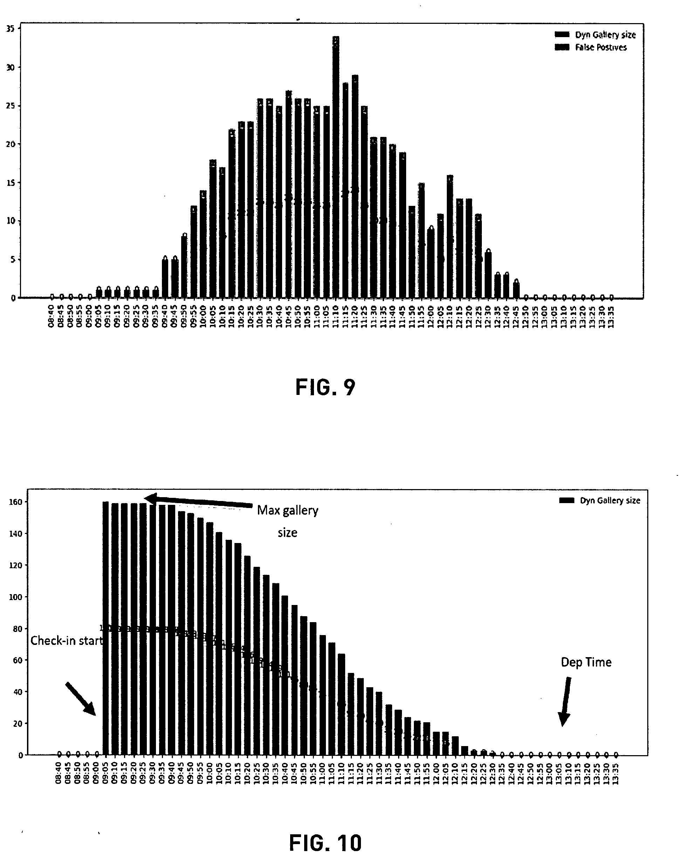

When the FRR is set to 0.02, some false positives (FPs) may occur as the gallery size increases and it reduces as the gallery size decreases. A skilled person would appreciate that the FPs here are not absolute numbers representing the certainty of occurrence, but it represents possibility the number of false positives that may happen at each time interval assuming the factors like airports to passengers ratio, number of non-enrolled are kept constant, etc. FIG. 9 illustrates an occurrence of false positives as the gallery size changes over time.

In another exemplary embodiment, let's assume that all the enrolments happen prior to the check-in. In such a scenario, a gallery size may be equal to the number of people departing on that flight.

TABLE 3 - Factors affecting passenger flow for single flight departure

| Factors | Value |
| --- | --- |
| Pre Check-in biometric enrolment | 100% |
| Check-in biometric enrolment | 0% |
| No biometric enrolment | 0% |

The gallery size may gradually decrease as the authentication happens over time and prior to departure, the gallery size may reduce to zero. The effect of normal distribution may be seen on the slope of the gallery size at different time intervals. At early check-in (first 1 hr.), the gallery size may reduce gradually. Then for the next 2 hrs., the gallery size may reduce at a faster rate and again during the last hour the gallery size may reduce gradually, as shown in FIG. 10.

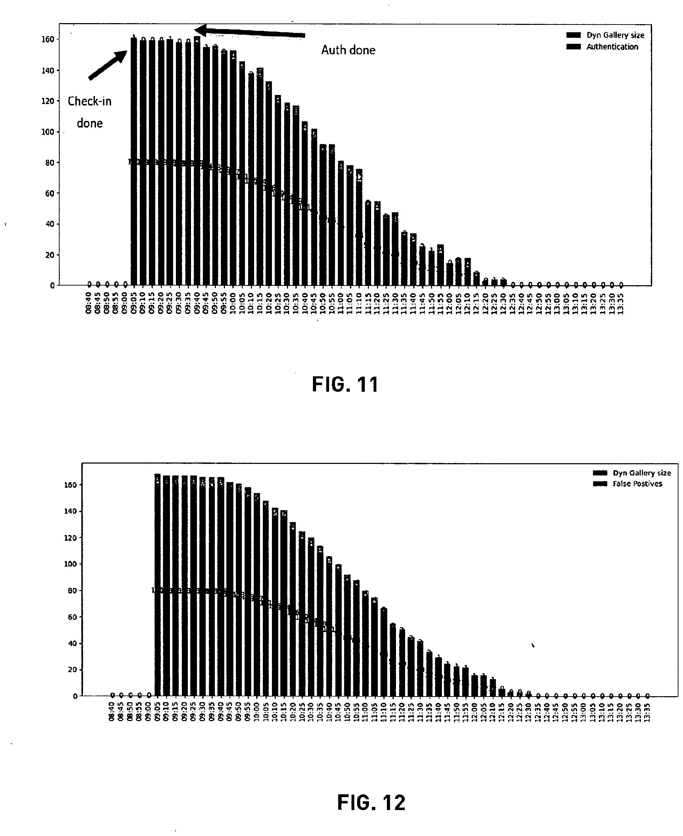

FIG. 11 illustrates a chart showing false positives when all the enrolments are made prior to the check in. The number of false positives decreases as the gallery size decreases.

In another exemplary embodiment, a two-flight simulation may be used to provide a clearer picture on the dynamic gallery size, authentications and related false positives. In addition to the flight used above, let's consider another flight departing at 2:15PM with the same number of passengers departing.

TABLE 4 - Two flight departure details

| Date | Time | Airport | Direction | Passenger s | Gate |
|------|------|---------|-----------|-------------|------|
| 06.09.2023 | 1:05:00 PM | MUC | D | 160 | 1A |
| 06.09.2023 | 2:15:00 PM | MUC | D | 160 | 1A |

For simplicity, let's consider an example of the two flights with the detail as shown in table-5.

TABLE 5- Factors affecting passenger flow for two flight departure

| Factors | Value |
|---------|-------|
| Pre Check-in biometric enrolment | 0% |
| Check-in biometric enrolment | 100% |
| No biometric enrolment | 0% |
| Check-in Open time | 4hrs before departure |
| Airport official to pax ratio | 1:10 |
| Walk time from kiosk to pre-security | 20mins |
| Check-in close before departure | 30mins |
| FRR | 0.02 |
| Gallery population | At check-in |

The example focuses on two flights with check-in starting times of 9:05 AM and 10:15 AM, respectively. The graph shown in FIG. 12 illustrates how the gallery size evolves when 100% biometric enrolments occur within the check-in period. Given that passengers arrive following a normal distribution for both flights, the Gaussian distribution's width is notably broader compared to a single flight example. The chosen analysis period begins at 8:40 AM and extends for 5 hours, concluding at 1:40 PM. Consequently, the departure time of the second flight extends beyond this analysis period.

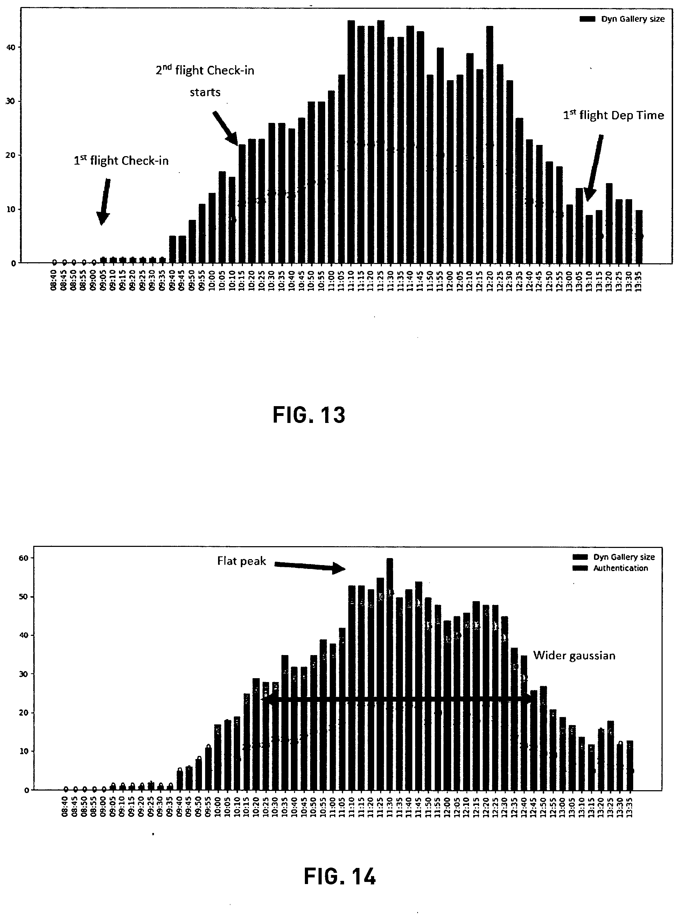

As depicted in FIG. 13, the overlapping normal distributions for the two flights result in a flat peak between 11:00 AM and 12:30 PM. This overlap occurs because the peaks of the two distributions coincide during this period, leading to an increase in the number of authentications.

Further, as shown in FIG. 14, when the False Rejection Rate (FRR) is set to 0.02, False Positives are more persistent during the flat peaks. This is due to the increased overlap of the normal distributions in this region, leading to a higher rate of incorrect identifications.

In another exemplary embodiment, let's consider two-flight with 100% enrolments happening prior to check in. The factors may be considered as shown in table-6.

TABLE 6 - Factors affecting passenger flow for two flights

| Factors | Value |
|---------|-------|
| Pre Check-in biometric enrolment | 100% |
| Check-in biometric enrolment | 0% |
| No biometric enrolment | 0% |

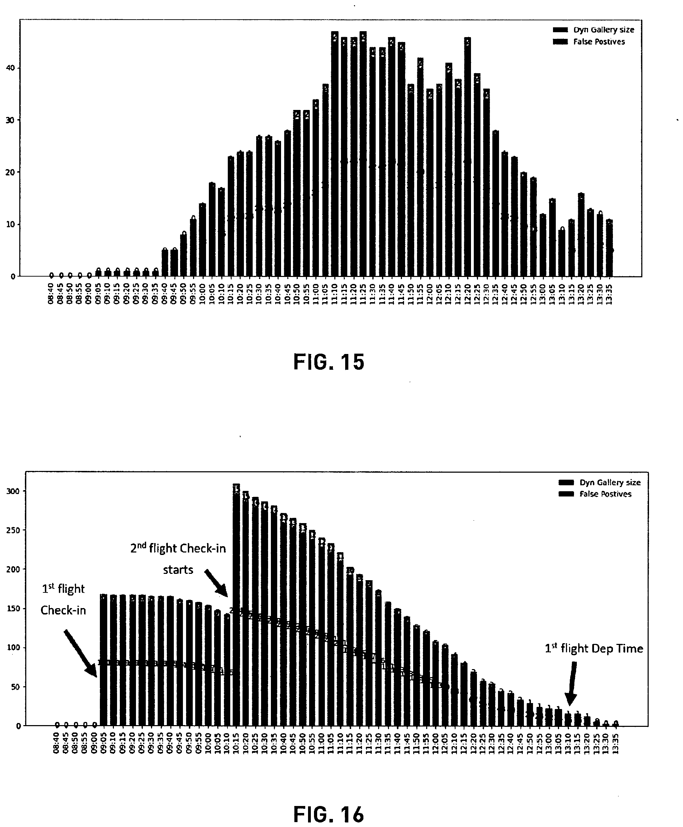

Compared to the single flight simulation, it may be observed that as soon as the second flight opens for check-in, the gallery size increases drastically due to the immediate population. This abrupt increase in gallery size also leads to a rise in related False Positives, as illustrated in FIG. 15.

The examples mentioned in the above paragraphs isolate one or the other type of enrolments. A skilled person would appreciate that it is hard to predict what the enrolment scenario may be for the airports or airlines. There are various factors which may affect the enrolments, such as availability of biometric technology different touchpoints, efficient mobile based solutions for enrolment prior to check-in, educating the passengers regarding biometrics and the new flow, providing incentives for using biometric technology, and addressing privacy concerns of the passengers, airports, airlines etc., but not limited thereto. Considering these facts, let's consider the following scenario:

TABLE 7 - Biometric enrolments for flights

| Factors | Value |
|---|---|
| Pre Check-in biometric enrolment | 30% |
| Check-in biometric enrolment | 50% |
| No biometric enrolment | 20% |
| Gallery population | At check-in |

FIG. 16 illustrates the effects of having a mix of biometric enrolments occurring both before and after the check-in windows. In this scenario, when the second flight opens for check-in, there is a noticeable increase in the gallery size. However, this increase is less dramatic compared to the case where 100% of passengers are enrolled before check-in, as only 30% of passengers have completed pre-check-in enrolment. This partial pre-check-in enrolment leads to a more moderate jump in gallery size, which reflects a slower and less intense population surge compared to full pre-check-in enrolment scenarios. Consequently, the authentication process for these two flights is affected by this dynamic gallery size, thereby resulting in proportional increases in False Positives. The relationship between gallery size and False Positives underscores the impact of enrolment timing on biometric system performance and accuracy.

Referring back to FIG. 6, the processor 602 may determine a number of enrolled users and a number of unenrolled users for being authenticated at a biometric authentication system, among the plurality of users, based on the transit facility data. The number of enrolled users indicates users who have opted for the authentication via the biometric authentication system provided at the checkpoint of the transit facility. Whereas the number of unenrolled users indicates users who have not opted for the authentication via the biometric authentication system provided at the checkpoint of the transit facility. In an embodiment, the number of enrolled users may be determined based on the number of users enrolled after arrival at the transit facility for the biometric authentication system, and the number of users already being enrolled before arrival at the transit facility for the biometric authentication system. The number of unenrolled users may be determined based on the total number of users and the number of enrolled users. To determine the number of unenrolled users, the processor 602 may subtract the number of enrolled users from the total number of users. In essence, the processor 602 may utilize the transit facility data to provide a clear breakdown of user enrolment status.

According to an embodiment, there may be a subset of unenrolled users who still interact with the biometric authentication system at the checkpoint, despite not having pre-enrolled. The processor 602 leverages a Receiver Operating Characteristic (ROC) model to estimate the number of such users. In an embodiment, the ROC model may be stored in the memory 604. In alternate embodiment, the ROC model may be stored in an external server and the apparatus 602 may be communicatively connected to the server to execute desired operations as described herein. Specifically, the processor 602 applies the ROC model to the determined number of unenrolled users to predict a set of users who are likely to approach the biometric authentication system at the checkpoint for authentication.

The ROC model may be pre-trained using a plurality of datasets to predict/estimate number of the enrolled users who are likely to arrive at the authentication system at the checkpoint. Each of the plurality of the dataset may comprise a diverse range of user images. Particularly, for training the ROC model, a plurality of datasets of varying sizes may be obtained and ROC data may be generated using the biometric authentication system for each of the plurality of datasets. The ROC data is indicative of a relation between a false negative identification rate (FNIR) and a false positive identification rate (FPIR) across a spectrum of biometric authentication threshold values. A statistical learning model may be trained based on the ROC data to identify the relation between the FNIR and the FPIR.

The processor 602 may also use the ROC model to predict a false positive identification rate (FPIR) based on the determined number of enrolled users and a biometric authentication threshold value of the biometric authentication system. In an embodiment, the biometric authentication threshold value may be preset to obtain a desired false negative identification rate (FNIR). Thereafter, a number of unenrolled users which are expected to be authenticated by the biometric authentication system may be determined based on the set of unenrolled users likely to arrive at the authentication system and the FPIR. The processor 602 may determine the one or more unenrolled users expected to be authenticated by the biometric authentication system using the below equation.

$$FP = N_{unmated} \times FPIR(N_{mated}, thresh)$$

Here, the FP represents the one or more unenrolled users, the $N_{unmated}$ represents the set of unenrolled users, and the $FPIR(N_{mated}, thresh)$ represents a false positive identification rate based on the number of enrolled users ($N_{mated}$), and the biometric authentication threshold value (thresh) of the biometric authentication system.

Once the processor 602 determines the expected number of unenrolled users likely to authenticated by the biometric authentication system, the processor 602 may further optimize the authentication process by adjusting the biometric authentication threshold value. This adjustment allows the system to dynamically control the flow and accuracy of authentication at the transit facility. By fine-tuning the threshold value, the processor may effectively balance the False Rejection Rate (FRR) and False Positive Identification Rate (FPIR) to ensure that the system adapts to the real-time demands of both enrolled and unenrolled users. For instance, if a higher volume of unenrolled users is predicted, the processor may lower the threshold to increase the system's sensitivity, thereby allowing for more accurate identifications without sacrificing speed. Conversely, if fewer unenrolled users are expected, the threshold may be adjusted to reduce the likelihood of false positives. This dynamic control ensures that the biometric system operates efficiently, providing a seamless authentication experience for all users at the transit facility while maintaining robust security and minimizing errors.

In an embodiment, if an enrolled user is rejected by the biometric -authentication system to a high False Rejection Rate (FRR) or a mismatch in facial recognition, the system may initiate a fallback procedure to verify the user's identity more accurately. In such cases, the system may prompt the user for additional user details 608, such as passport information, boarding pass details, or ticket number. In an embodiment, these user details 608 may be obtained at the enrolment time and staired in the memory 604. These supplementary data points allow the system to switch from a 1:N (one-to-many) facial recognition process, where the user's face is compared against a larger gallery of enrolled individuals, to a 1:1 (one-to-one) verification process. This method directly matches the user's facial data with the additional information provided, improving the accuracy of the identification. By narrowing the authentication scope, the system may effectively validate the user's identity, mitigating the risk of false rejections and ensuring a smoother authentication experience without compromising security. This fallback mechanism adds an extra layer of reliability to the biometric system, especially in high-traffic environments like transit facilities.

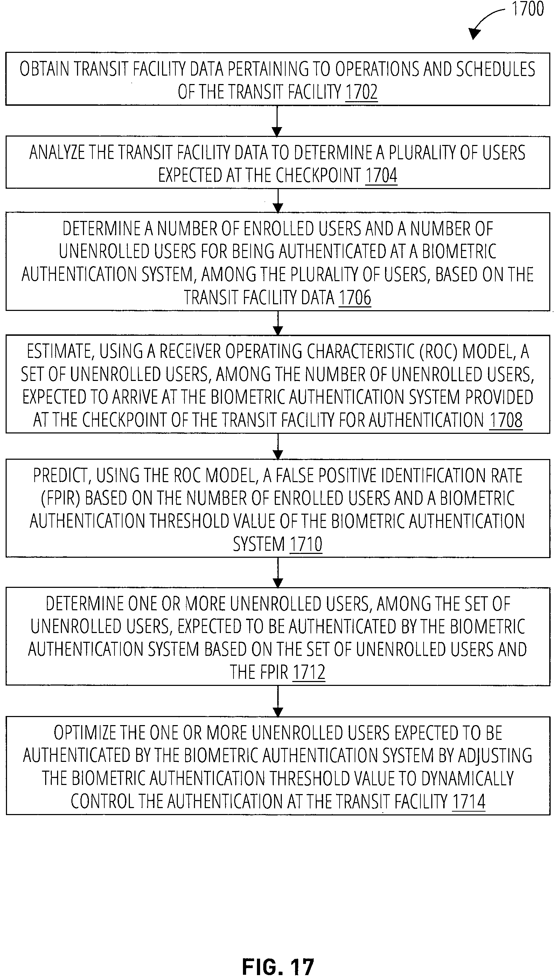

FIG. 17 illustrates a flow chart of a method for dynamic authentication control at a transit facility having a plurality of checkpoints, in accordance with an embodiment of the present disclosure. The blocks of the flow diagram shown in FIG. 17 have been arranged in a generally sequential manner for ease of explanation; however, it is to be understood that this arrangement is merely exemplary, and it should be recognized that the functionality/processing associated with method 1700 (and the blocks shown in FIG. 17) can occur in a different order (for example, where at least some of the functionality/processing associated with the blocks is performed in parallel and/or in an event-driven manner).

In block 1702, the method 1700 obtains transit facility data pertaining to operations and schedules of the transit facility. The transit facility data may comprise at least one of: a number of checkpoints, user transit time data indicating time duration required to travel from one checkpoint to another checkpoint of the transit facility, transport schedule data, check-in time data of the transit facility, a number of users enrolled after arrival at the transit facility for the biometric authentication system, and a number of users already being enrolled before arrival at the transit facility for the biometric authentication system, but not limited thereto.

The number of checkpoints refers to the total number of security, boarding, or verification checkpoints within the transit facility. The user transit time data is an estimated or actual time it takes for a passenger to travel from one checkpoint to another within the facility. For instance, how long it takes to walk from the check-in counter to the security checkpoint, or from the security checkpoint to the boarding gate. This data helps the system predict when passengers are likely to arrive at each checkpoint, thereby allowing for dynamic adjustments in the authentication process (e.g., lowering false rejection rates during high-traffic periods). Further, the transport schedule data may indicate the timing of transport services like flights, trains, or buses. This provides information on when departures and arrivals are scheduled, which helps the system anticipate peak times when a high volume of passengers may need to pass through checkpoints. For instance, if a large flight is about to board, the system may prioritize and adjust the biometric authentication process accordingly.

Further, the check-in time data may refer to the specific check-in times provided by the transit facility, such as the window of time when passengers can check in for a flight or train. By knowing the check-in schedule, the system may predict the initial surge of passengers and adjust the biometric system's settings, such as enrollment and authentication thresholds, to accommodate this influx. The number of users enrolled after arrival captures the number of passengers who enroll in the biometric authentication system after they arrive at the transit facility. These passengers might use kiosks or mobile devices to enroll at the last minute. The system needs to account for these late enrollments and adjust the database dynamically to determine total number of enrolled users. The number of users already enrolled before arrival refers to passengers who have pre-enrolled in the biometric system before arriving at the facility, possibly through a mobile application or previous check-ins. By leveraging these different types of data, the biometric system may optimize authentication processes in real-time, adjusting its behavior based on passenger flow, transport schedules, and the enrollment status of users. Further, for each checkpoint of the transit facility, the method performs the followings steps.

In block 1704, the method 1700 analyzes the transit facility data to determine a plurality of users expected at each of the checkpoint. In block 1706, the method 1700 determines a number of enrolled users and a number of unenrolled users for being authenticated at a biometric authentication system, among the plurality of users, based on the transit facility data. The number of enrolled users indicates users who have opted for the authentication via the biometric authentication system provided at the checkpoint of the transit facility. Whereas the number of unenrolled users indicates users who have not opted for the authentication via the biometric authentication system provided at the checkpoint of the transit facility. In an embodiment, the number of enrolled users may be determined based on the number of users enrolled after arrival at the transit facility for the biometric authentication system, and the number of users already being enrolled before arrival at the transit facility for the biometric authentication system. The number of unenrolled users may be determined based on the total number of users and the number of enrolled users. To determine the number of unenrolled users, the number of enrolled users may be subtracted from the total number of users.

According to an embodiment, there may be a subset of unenrolled users who still interact with the biometric authentication system at the checkpoint, despite not having pre-enrolled. In block 1708, the method 1700 estimates a set of unenrolled users, among the number of unenrolled users, expected to arrive at the biometric authentication system provided at the checkpoint of the transit facility for authentication, using ROC model. The ROC model may be pre-trained using a plurality of datasets to predict/estimate number of the enrolled users who are likely to arrive at the authentication system at the checkpoint. Each of the plurality of the dataset may comprise a diverse range of user images. Particularly, for training the ROC model, a plurality of datasets of varying sizes may be obtained and ROC data may be generated using the biometric authentication system for each of the plurality of datasets. The ROC data is indicative of a relation between a false negative identification rate (FNIR) and a false positive identification rate (FPIR) across a spectrum of biometric authentication threshold values. A statistical learning model may be trained based on the ROC data to identify the relation between the FNIR and the FPIR.

In block 1710, the method 1700 predicts, using the ROC model, a false positive identification rate (FPIR) based on the number of enrolled users and a biometric authentication threshold value of the biometric authentication system. In an embodiment, the biometric authentication threshold value may be preset to obtain a desired false negative identification rate (FNIR). In block 1712, the method 1700 determines one or more unenrolled users, among the set of unenrolled users, expected to be authenticated by the biometric authentication system based on the set of unenrolled users and the FPIR. The number of one or more unenrolled users which are expected to be authenticated by the biometric authentication system may be determined based on the set of unenrolled users likely to arrive at the authentication system and the FPIR. The one or more unenrolled users expected to be authenticated by the biometric authentication system may be determined using the below equation.

$$FP = N_{unmated} \times FPIR(N_{mated}, thresh)$$

Here, the FP represents the one or more unenrolled users, the $N_{unmated}$ represents the set of unenrolled users, and the $FPIR(N_{mated}, thresh)$ represents a false positive identification rate based on the number of enrolled users ($N_{mated}$), and the biometric authentication threshold value (thresh) of the biometric authentication system.

Once the expected number of unenrolled users likely to authenticated by the biometric authentication system are determined, the method 1700, in block 1714, optimizes the one or more unenrolled users expected to be authenticated by the biometric authentication system by adjusting the biometric authentication threshold value to dynamically control the authentication at the transit facility.

This adjustment allows the system to dynamically control the flow and accuracy of authentication at the transit facility. By fine-tuning the threshold value, the processor may effectively balance the False Rejection Rate (FRR) and False Positive Identification Rate (FPIR) to ensure that the system adapts to the real-time demands of both enrolled and unenrolled users. For instance, if a higher volume of unenrolled users is predicted, the processor may lower the threshold to increase the system's sensitivity, thereby allowing for more accurate identifications without sacrificing speed. Conversely, if fewer unenrolled users are expected, the threshold may be adjusted to reduce the likelihood of false positives. This dynamic control ensures that the biometric system operates efficiently, providing a seamless authentication experience for all users at the transit facility while maintaining robust security and minimizing errors.

In this manner, the present disclosure enables the authentication system to dynamically adapt by leveraging live flight schedules and varying biometric gallery sizes in conjunction with the design-time parameters. This real-time adaptability enables predictive performance measurement and optimization, thereby ensuring that the system responds effectively to changing conditions, such as fluctuations in passenger volume and variations in biometric enrollment rates. The biometric system may dynamically adjust the False Negative Identification Rate (FNIR) based on authentication complexity and gallery size which significantly reduce risk. By intelligently managing the FNIR, the system may maintain a high verification success rate. The system may also switch from a 1:N verification process to a more secure 1:1 process when necessary. This dynamic adjustment allows the system to balance throughput, security, and user experience, offering a more reliable and efficient solution for airport authentication processes.

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the detailed description.

The order in which the various operations of the methods are described is not intended to be construed as a limitation, and any number of the described method blocks can be combined in any order to implement the method. Additionally, individual blocks may be deleted from the methods without departing from the spirit and scope of the subject matter described herein. Furthermore, the methods can be implemented in any suitable hardware, software, firmware, or combination thereof.

It may be noted here that the subject matter of some or all embodiments described with reference to Figs. 1-17 may be relevant for the methods and the same is not repeated for the sake of brevity.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in Figures, those operations may be performed by any suitable corresponding counterpart means-plus-function components.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, nonvolatile memory, hard drives, Compact Disc (CD) ROMs, Digital Video Disc (DVDs), flash drives, disks, and any other known physical storage media.

Certain aspects may comprise a computer program product for performing the operations presented herein. For example, such a computer program product may comprise a computer readable media having instructions stored (and/or encoded) thereon, the instructions being executable by one or more processors to perform the operations described herein. For certain aspects, the computer program product may include packaging material.

Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

As used herein, a phrase referring to "at least one" or "one or more" of a list of items refers to any combination of those items, including single members. As an example, "at least one of: a, b, or c" is intended to cover: a, b, c, a-b, a-c, b-c, and a-b-c. The terms "a", "an" and "the" mean "one or more", unless expressly specified otherwise. The terms "including", "comprising", "having" and variations thereof, when used in a claim, is used in a non-exclusive sense that is not intended to exclude the presence of other elements or steps in a claimed structure or method, unless expressly specified otherwise.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present disclosure are intended to be illustrative, but not limiting, of the scope of the invention, which is set forth in the appended claims.

**Claims**

1. A method (1700) for dynamic authentication control at a transit facility having a plurality of checkpoints, the method (1700) comprising:

   obtaining (1702) transit facility data pertaining to operations and schedules of the transit facility;
   for each checkpoint of the transit facility:

   analyzing (1704) the transit facility data to determine a plurality of users expected at the checkpoint;
   determining (1706) a number of enrolled users and a number of unenrolled users for being authenticated at a biometric authentication system, among the plurality of users, based on the transit facility data;
   estimating (1708), using a Receiver Operating Characteristic (ROC) model, a set of unenrolled users, among the number of unenrolled users, expected to arrive at the biometric authentication system provided at the checkpoint of the transit facility for authentication;
   predicting (1710), using the ROC model, a false positive identification rate (FPIR) based on the number of enrolled users and a biometric authentication threshold value of the biometric authentication system;
   determining (1712) one or more unenrolled users, among the set of unenrolled users, expected to be authenticated by the biometric authentication system based on the set of unenrolled users and the FPIR; and
   optimizing (1714) the one or more unenrolled users expected to be authenticated by the biometric authentication system by adjusting the biometric authentication threshold value to dynamically control the authentication at the transit facility.

2. The method (1700) of claim 1, wherein:

the number of enrolled users indicates users who have opted for the authentication via the biometric authentication system provided at the checkpoint of the transit facility,
the number of unenrolled users indicates users who have not opted for the authentication via the biometric authentication system provided at the checkpoint of the transit facility, and
the biometric authentication threshold value is preset to obtain a desired false negative identification rate (FNIR).

3. The method (1700) of claim 1, wherein the transit facility data comprises at least one of:

a number of checkpoints;
user transit time data indicating time duration required to travel from one checkpoint to another checkpoint of the transit facility;
transport schedule data;
check-in time data of the transit facility;
a number of users enrolled after arrival at the transit facility for the biometric authentication system, and
a number of users already being enrolled before arrival at the transit facility for the biometric authentication system.

4. The method (1700) of Claim 1, wherein the ROC model is trained using a plurality of datasets, wherein each dataset comprises a diverse range of user images.

5. The method (1700) of claim 4, wherein training the ROC model using the plurality of datasets comprises:

receiving the plurality of datasets of varying sizes;
generating ROC data using the biometric authentication system for each of the plurality of datasets, wherein the ROC data is indicative of a relation between a FNIR and the FPIR across a spectrum of biometric authentication threshold values; and
training a statistical learning model, based on the ROC data, to identify the relation between the FNIR and the FPIR.

6. The method (1700) of claim 1, wherein determining the one or more unenrolled users, among the set of unenrolled users, expected to be authenticated by the biometric authentication system based on the set of unenrolled users and the FPIR comprises determining the one or more unenrolled users by:

$$FP = N_{unmated} \times FPIR(N_{mated}, thresh)$$

wherein the FP represents the one or more unenrolled users, the $N_{unmated}$ represents the set of unenrolled users, and the $FPIR(N_{mated}, thresh)$ represents the false positive identification rate based on the number of enrolled users ($N_{mated}$), and the biometric authentication threshold value (thresh) of the biometric authentication system.

7. An apparatus to dynamic control authentication at a transit facility having a plurality of checkpoints, the apparatus comprises:

means for obtaining transit facility data pertaining to operations and schedules of the transit facility;
for each checkpoint of the transit facility:

means for analyzing the transit facility data to determine a plurality of users expected at the checkpoint;
means for determining a number of enrolled users and a number of unenrolled users for being authenticated at a biometric authentication system, among the plurality of users, based on the transit facility data;
means for estimating, using a Receiver Operating Characteristic (ROC) model, a set of unenrolled users, among the number of unenrolled users, expected to arrive at the biometric authentication system provided at the checkpoint of the transit facility for authentication;
means for predicting, using the ROC model, a false positive identification rate (FPIR) based on the number of enrolled users and a biometric authentication threshold value of the biometric authentication system;
means for determining one or more unenrolled users, among the set of unenrolled users, expected to be authenticated by the biometric authentication system based on the set of unenrolled users and the FPIR; and
means for optimizing the one or more unenrolled users expected to be authenticated by the biometric authentication system by adjusting the biometric authentication threshold value to dynamically control the authentication at the transit facility.

8. The apparatus of claim 7, wherein:

the number of enrolled users indicates users who have opted for the authentication via the biometric authentication system provided at the checkpoint of the transit facility,
the number of unenrolled users indicates users who have not opted for the authentication via the biometric authentication system provided at the checkpoint of the transit facility, and
the biometric authentication threshold value is preset to obtain a desired false negative identification rate (FNIR).

9. The apparatus of claim 7, wherein the transit facility data comprises at least one of:

a number of checkpoints;
user transit time data indicating time duration required to travel from one checkpoint to another checkpoint of the transit facility;
transport schedule data;
check-in time data of the transit facility;
a number of users enrolled after arrival at the transit facility for the biometric authentication system, and
a number of users already being enrolled before arrival at the transit facility for the biometric authentication system.

10. The apparatus of claim 7, wherein the ROC model is trained using a plurality of datasets, wherein each dataset comprises a diverse range of user images.

11. The apparatus of claim 10, wherein to train the ROC model using the plurality of datasets, further comprises:

means for receiving the plurality of datasets of varying sizes;
means for generating ROC data using the biometric authentication system for each of the plurality of datasets, wherein the ROC data is indicative of a relation between a FNIR and the FPIR across a spectrum of biometric authentication threshold values; and
means for training a statistical learning model, based on the ROC data, to identify the relation between the FNIR and the FPIR.

12. The apparatus of claim 7, wherein means for determining the one or more unenrolled users, among the set of unenrolled users, expected to be authenticated by the biometric authentication system based on the set of unenrolled users and the FPIR, determines the one or more unenrolled users using:

$$FP = N_{unmated} \cdot x\ FPIR(N_{mated}, thresh)$$

wherein the FP represents the one or more unenrolled users, the $N_{unmated}$ represents the set of unenrolled users, and the $FPIR(N_{mated}, thresh)$ represents the false positive identification rate based on the number of enrolled users ($N_{mated}$), and the biometric authentication threshold value (thresh) of the biometric authentication system.

13. The apparatus of any of claims 7-12, wherein the one or more means comprises at least one processor (602).

14. A non-transitory computer readable media for dynamic authentication control at a transit facility having a plurality of checkpoints, wherein the non-transitory computer readable media stores one or more instructions which, when executed by at least one processor causes the at least one processor to perform method steps claimed in claims 1-7.

FIG. 1

FIG. 2

**FIG. 3**

**FIG. 4**

**FIG. 5**

**FIG. 6**

**FIG. 7**

**FIG. 8**

**FIG. 9**

**FIG. 10**

**FIG. 11**

**FIG. 12**

**FIG. 13**

**FIG. 14**

FIG. 15

FIG. 16

1700

OBTAIN TRANSIT FACILITY DATA PERTAINING TO OPERATIONS AND SCHEDULES OF THE TRANSIT FACILITY 1702

ANALYZE THE TRANSIT FACILITY DATA TO DETERMINE A PLURALITY OF USERS EXPECTED AT THE CHECKPOINT 1704

DETERMINE A NUMBER OF ENROLLED USERS AND A NUMBER OF UNENROLLED USERS FOR BEING AUTHENTICATED AT A BIOMETRIC AUTHENTICATION SYSTEM, AMONG THE PLURALITY OF USERS, BASED ON THE TRANSIT FACILITY DATA 1706

ESTIMATE, USING A RECEIVER OPERATING CHARACTERISTIC (ROC) MODEL, A SET OF UNENROLLED USERS, AMONG THE NUMBER OF UNENROLLED USERS, EXPECTED TO ARRIVE AT THE BIOMETRIC AUTHENTICATION SYSTEM PROVIDED AT THE CHECKPOINT OF THE TRANSIT FACILITY FOR AUTHENTICATION 1708

PREDICT, USING THE ROC MODEL, A FALSE POSITIVE IDENTIFICATION RATE (FPIR) BASED ON THE NUMBER OF ENROLLED USERS AND A BIOMETRIC AUTHENTICATION THRESHOLD VALUE OF THE BIOMETRIC AUTHENTICATION SYSTEM 1710

DETERMINE ONE OR MORE UNENROLLED USERS, AMONG THE SET OF UNENROLLED USERS, EXPECTED TO BE AUTHENTICATED BY THE BIOMETRIC AUTHENTICATION SYSTEM BASED ON THE SET OF UNENROLLED USERS AND THE FPIR 1712

OPTIMIZE THE ONE OR MORE UNENROLLED USERS EXPECTED TO BE AUTHENTICATED BY THE BIOMETRIC AUTHENTICATION SYSTEM BY ADJUSTING THE BIOMETRIC AUTHENTICATION THRESHOLD VALUE TO DYNAMICALLY CONTROL THE AUTHENTICATION AT THE TRANSIT FACILITY 1714

FIG. 17

Europäisches
Patentamt
European
Patent Office
Office européen
des brevets

# EUROPEAN SEARCH REPORT

**Application Number**

EP 24 31 5431

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 969 528 B1 (DAON HOLDINGS LTD [KY]) 25 May 2011 (2011-05-25) * paragraph [0001] - paragraph [0034] * * paragraph [0042] - paragraph [0047] * * claims 1-12 * * figures 1-6 * | 1-14 | INV. G07C9/25 G07C9/27 G07C9/37 G07C9/38 |
| A | US 2008/317294 A1 (HASHIMOTO YASUNARI [JP]) 25 December 2008 (2008-12-25) * paragraph [0003] - paragraph [0021] * * paragraph [0069] - paragraph [0126] * * claims 1-20 * * figures 1-18 * | 1-14 | |
| A | PATRICK J GROTHER ET AL: "Face in video evaluation (FIVE) face recognition of non-cooperative subjects NIST IR 8173", NIST, NATIONAL INSTITUTE OF STANDARDS AND TECHNOLOGY (NIST) , 6 March 2017 (2017-03-06), pages 1-115, XP061056159, DOI: 10.6028/NIST.IR.8173 Retrieved from the Internet: URL:https://nvlpubs.nist.gov/nistpubs/ir/2 017/NIST.IR.8173.pdf [retrieved on 2017-03-31] * page 2 - page 15 * * page 69 - page 70 * | 1-14 | TECHNICAL FIELDS SEARCHED (IPC) G07C |
| A | Ruud M. Bolle: "Guide to Biometrics: Chapters 2, 5, 6, 9-11" In: "Guide to Biometrics", 1 February 2004 (2004-02-01), Springer, XP055150673, ISBN: 978-1-44-192305-9 * page 69 - page 85 * | 1-14 | |

The present search report has been drawn up for all claims

| Place of search | Date of completion of the search | Examiner |
|---|---|---|
| The Hague | 24 February 2025 | Neumann, Christoph |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 31 5431

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2025

| Patent document cited in search report | | Publication date | Patent family member(s) | | Publication date |
|---|---|---|---|---|---|
| EP 1969528 | B1 | 25-05-2011 | AT | E511154 T1 | 15-06-2011 |
| | | | EP | 1969528 A1 | 17-09-2008 |
| | | | WO | 2007071289 A1 | 28-06-2007 |
| US 2008317294 | A1 | 25-12-2008 | JP | 5012247 B2 | 29-08-2012 |
| | | | JP | 2009003659 A | 08-01-2009 |
| | | | US | 2008317294 A1 | 25-12-2008 |

EPO FORM P0459

For more details about this annex : see Official Journal of the European Patent Office, No. 12/82